# EUROPEAN PATENT APPLICATION

(11) **EP 4 546 251 A1**
(43) Date of publication of application: **30.04.2025**
(21) Application number: 23205375.1
(22) Date of filing: 24.10.2023
(51) Int. Cl.: G06T 5/60, B23K 26/00

(54) **METHOD FOR GENERATING A MOLD TEXTURE FOR A CASTING MOLD AND CORRESPONDING DEVICE**

(71) Applicant: GF Machining Solutions SA, 1217 Meyrin 1 (CH)
(72) Inventor: Demierre, Alexis, 01170 Chevry (FR)
(74) Representative: Li Schrag, Yue

(57) **Abstract**

The invention relates to a method for generating a mold texture (3) for a casting mold (1). It is provided that the mold texture (3) is generated from a seed texture (4), the mold texture (3) having a larger texture size in at least one dimension than the seed texture (4), wherein the seed texture (4) is provided as an input texture for a generative neural network (7) with a plurality of neural network parameters determined during training of the generative neural network (7) and the generative neural network (7) is used to extend the seed texture (4) to the texture size of the mold texture (3). The invention further relates to a device for generating a mold texture (3) for a casting mold (2), a computer program and a computer-readable medium.

## Description

The invention relates to a method for generating a mold texture for a casting mold. It further relates to a device for generating a mold texture for a casting mold, a computer program and a computer-readable medium.

From prior art, for example prior art document EP 3 047 932 A1 is known. It discloses a laser ablation method for the engraving of a surface of a two or three dimensional workpiece with a texture by the laser beam of a laser machining head. The surface engraving is conducted in one or more layers, which are machined consecutively, wherein each defined layer to be machined is subdivided into one or more patches intended be machined one after another with the laser beam. In the present case, the borderline of at least one patch is determined in such a manner to follow along a path on the layer (which will not be affected by the laser beam engraving of the laser machining head.

Further, prior art document US 2022/0148299 A1 describes methods, systems, and apparatus, including computer programs encoded on a computer storage medium, for generating realistic extensions of images. In one aspect, the method comprises providing an input that comprises a provided image to a generative neural network having a plurality of generative neural network parameters. The generative neural network processes the input in accordance with trained values of the plurality of generative neural network parameters to generate an extended image. The extended image has (i) more rows, more columns, or both than the provided image, and (ii) is predicted to be a realistic extension of the provided image. The generative neural network is trained using an adversarial loss objective function. However, the size of the extended image is fixed in one direction and limited by the structure of the generative neural network.

It is the object of the invention to provide a method for generating a mold texture for a casting mold which has advantages over known methods, especially provides a mold texture that has a similar look and feel as a seed texture, is practically seamless and has a size that can be chosen according to the size of the mold.

This is achieved by using the method for generating a mold texture for a casting mold according to claim 1. The method is characterized in that the mold texture is generated from a seed texture, the mold texture having a larger texture size in at least one dimension than the seed texture, wherein the seed texture is provided as an input texture for a generative neural network with a plurality of neural network parameters determined during training of the generative neural network and the generative neural network is used to extend the seed texture to the texture size of the mold texture.

Advantageous embodiments with expedient further embodiments of the invention are indicated in the dependent claims. It is pointed out that the embodiments explained in the description are not limiting; rather, any variations of the features disclosed in the description, the claims and the figures are realisable.

The mold texture is preferably used to create the casting mold which is then used to create one or more workpieces during a molding process with a surface that corresponds to the mold texture. The molding process is for example an injection molding process or a die casting process. The casting mold is particularly machined using laser ablation, during which the mold texture is applied to the casting mold, i. e. a surface of the casting mold. Applying the mold texture to the casting mold is, for example, done by engraving the texture into the mold. Usually, the mold texture is a grayscale picture with texture data consisting of several pixels having pixel values in a predetermined range. For example, the mold texture is a grayscale picture with a single colour channel. It is a two-dimensional array of pixels each having a pixel value. The pixel values are preferably eight bit values, ranging from 0 to 255 or from -127 to 127, or sixteen bit values. For example, the colour depth of the pixels or pixel values is chosen depending on the capabilities of the CAM software that is used to apply the mold texture to the casting mold. It is also possible not to use the whole range of the pixel values, so that for the eight bit values the pixel values range from 0 to less than 255, less than 200 or less than 160, preferably the pixel values range from 0 to 155.

The larger the workpiece is, the larger the casting mold and thus the mold texture needs to be. Providing a sufficiently large mold texture is usually unproblematic if the texture is wholly structured and, for example, consists of regularly spaced geometries as dots or lines. The opposite is true if an unstructured texture has to be provided on the workpiece and, thus, the casting mold. An unstructured texture for example tries to emulate the look and feel of an organic structure, for example skin, especially snake skin, leather and the like.

Known methods for generating such an unstructured mold texture usually rely on scanning an existing surface, for example by laser scanning. This method is limited to the size of the existing surface, in that the mold texture cannot exceed this size without repeating the pattern. The repetition of the pattern can lead to visible artifacts in the texture or on the finished product as the resulting mold texture is not continuous across a border between the original scanned pattern and its repetition. Also, a mere repetition of the scanned pattern leads to visible periodicity problems as the same unaltered pattern is repeatedly recognizable in the mold texture and on the finished product. To alleviate at least some of these problems, the mold texture may be postprocessed, for example by smoothing the texture. As an alternative, the mold texture may be hand-crafted by a designer. However, this process is time consuming and requires great effort, leading to high costs. However, the results again may not be as expected, as still repetitions can be visible.

In order to generate a mold texture with an arbitrary size, in a first step a seed texture is provided which has all the required features of the mold texture but is smaller in size in at least one dimension. For example, the size of the seed texture is - in one or more dimensions in a cartesian coordinate system - at most 30 %, at most 20 % or at most 10 % the size of the mold texture that is, preferably, later applied to the casting mold. For example, the seed texture has a size in one dimension of at most 1024, at most 512 or at most 256 pixels. In another example, the seed texture is quadratic, i. e. its sizes in different dimensions are identical. In this case, the seed texture has, by way of example, dimensions of at most 1024 x 1024, at most 512 x 512 or at most 256 x 256. Preferably, the size of the mold texture is in at least one dimension, ideally in two dimensions, a whole-number multiple of the seed texture's size. That means, that the size of the mold texture in the at least one direction is equal to the size of the seed texture in that direction multiplied with a whole number, i. e. an integer. However, it is also possible to use a ration between the size of the mold texture and the size of the seed texture that is not a whole number. In this case, excess pixels are generated and cropped.

In an ordinary process for creating the mold texture, this would mean potentially many repetitions and, thus, many visible borders throughout the mold texture. To avoid these, the mold texture is created using a generative neural network that has been trained to this purpose. The generative neural network has a plurality of neural network parameters that are determined during training of the neural network. After the training is complete, the generative neural network with its neural network parameters is used to extend the seed texture to the mold texture, i. e. to generate a (larger) mold texture from the (smaller) seed texture. To this effect, at least a part of the seed texture is directly or indirectly used as an input texture for the generative neural network, which - based on the input texture - provides an output texture. The output texture is used to create the mold texture.

Generally, the generative neural network has an input layer, an output layer as well as at least one hidden layer, i. e. one or more hidden layers, the output layer being connected to the input layer via the at least one hidden layer. For example, a convolutional neural network with a plurality of independent convolutional filter groups is used as the generative neural network or as part of the generative neural network. The filter groups represent different channels of the network and are, preferably, adapted in such a way that they reproduce different feature scales of the seed texture or input texture.

Every layer of the neural network has its own input tensor and output tensor. Subsequent layers take the output tensor of a preceding layer as an input tensor and provide their own output tensor based on that input tensor. This means, that the input layer receives an input tensor for the neural network and provides an output tensor for the at least one hidden layer. The output tensor of the input layer may be identical to its input tensor. The output layer receives an output tensor of the at least one hidden layer as its input tensor and provides an output tensor based on it. Again, the output tensor of the output layer may be identical to its input tensor, at least for illustration purposes. In summary, the input layer receives an input tensor and the generative neural network provides an output tensor at the output layer based on that input tensor via the at least one hidden layer. The input tensor of the input layer corresponds to the source texture or is derived from the source texture. The output texture corresponds to the output tensor of the output layer or is derived from it. Other structures of the generative neural network may, of course, also be envisioned.

It is, for example, possible, that the output texture of the generative neural network has the same size as the mold texture. This makes it possible to provide the mold texture, that is based on the seed texture, in a single step. Such a process is well possible for sufficiently small mold textures. With increasing size of the mold texture, however, the number of neural network parameters increases, for example because of an increasing number of layers and/or nodes per layer in the neural network. In this case, several steps may be necessary to complete the mold texture. For example, the generative neural network is repeatedly provided with the input texture, preferably different input textures, and creates an output texture for each of the one or more input textures. This means, in other words, that it takes the input texture or, generally speaking, texture data and extends it in at least one direction. It is preferred, that the size of the input texture is identical to the size of the seed texture or vice versa, especially in every dimension of the texture. The resulting output textures are then used to complete the mold texture, for example by tiling, with or without overlap. It is especially preferable in this context, to use a part of the preceding output texture as the input texture of the generative neural network.

Using the generative neural network to create the mold texture by using the seed texture as an input texture, the problems usually associated with creating large-scale mold texture are alleviated or completely eliminated. Especially visible repetitions of the seed texture in the mold textures are avoided effectively. Further, it is possible to create a completely seamless mold texture, especially if the mold texture is created in a single step from the seed texture by the generative neural network. This requires that the generative neural network is large enough to provide for such an approach. In the alternative, the seamless mold texture is achieved in several steps. In each step the generative neural network is used to create an output texture, directly or indirectly based on the seed texture, that is used to generate the mold texture. Using this approach, the mold texture comprises a plurality of output textures, each of which is generated by the generative neural network based on the respective input texture. The input texture either corresponds to the seed texture, to a former output texture or to a part of the mold texture that contains at least a part of the the seed texture and/or at least a part of one or more former output textures. Such a procedure leads to an exceptional high quality of the mold texture, meaning especially a seamless and coherent mold texture.

According to a further embodiment of the invention, it is provided that the generative neural network is part of an generative adversarial network together with a discriminatory neural network, and the generative neural network and the discriminatory neural network are trained with a training dataset that comprises a plurality of sample textures which are, for example, extracted from a training texture. The generative adversarial network contains a generative part, the generative neural network, as well as a discriminatory part, the discriminatory neural network. The discriminatory neural network is trained using the training dataset. The training dataset comprises several sample textures that preferably have the same size in every dimension but differ in their content. For example the sample textures are variations of the seed texture or - formulated more broadly - variations of possible seed textures based on which the mold texture will be created. Preferably, the sample textures are extracted from the training texture, especially at different positions. The sample texture may be modified after extracting them from the training texture. For example, all sample textures are extracted from the training texture, and only some of the sample texture are modified, e. g. with random data. That means in summary, that for the training, some sample textures are used in an unmodified condition while some sample textures are used in a modified condition.

The generative neural network is used to create the output texture from the input texture. Either the output texture or one of the sample textures is fed to the discriminatory neural network as an input texture which tries to discern, whether its input texture was created by the generative neural network or is part of the training dataset. Based on the output of the discriminatory neural network the generative neural network is trained by adapting its neural network parameters. This process is repeated until for a given number of iterations while keeping the generative neural network and the discriminatory neural network in equilibrium, especially with respect to their cost functions. The discriminatory neural network is obviously only used during the training, i. e. until the generative neural network and its neural network parameters have reached a staged in which they produce output textures of sufficient quality. For determining the mold texture, i. e. for extending the seed texture to the texture size of the mold texture, only the generative neural network is used. The mechanism of the generative neural network are known in principle and are, therefore, not further discussed.

According to a further embodiment of the invention, it is provided that during training of the generative adversarial network the generative neural network and the discriminatory neural network are trained alternatingly. Following usual principles for the generative adversarial network, the two parts of the network, namely the generative part and the discriminatory part, are preferably trained in turns. In a first step, the discriminatory neural network is trained based on the training dataset, which may be complemented by random textures. The discriminatory neural network thus learns to differentiate between wanted textures, namely textures similar to the sample textures of the training dataset, and unwanted textures, namely texture that differ too strongly from the sample textures. During the first step, the generative neural network is frozen, i. e. its neural network parameters are not updated.

After the first step, the generative neural network is trained. In this process, it is used to generate at least one output texture, i. e. one or more output textures, which are then used an input texture for the discriminatory neural network. The latter determines a score regarding the possibility that the at least one output texture is part of the training dataset. Based on this score the neural network parameters of the generative neural network are adapted in such a way that the score changes towards a value that indicates that the discriminatory neural network cannot differentiate the output texture from the sample textures in the training dataset, i. e. that the output texture is structurally similar to the sample textures of the training dataset, for example based on a reconstruction loss function. Afterwards, the two steps are repeated, the random textures being replaced with output texture of the generative neural network. Again, this basic principle of the generative neural network is known and will not be further detailed.

According to a further embodiment of the invention, it is provided that for generating the mold texture, the mold texture is cleared from texture data and the seed texture is written as texture data into a suitable area of the mold texture. Before using the generative neural network to generate the output texture, the mold texture is prepared. For example, all pixels of the mold texture are set to a default value or to random values. During the latter process the mold texture is initialized in such a way that each of its pixels is set to a respective random value. For each pixel the random value is determined anew, so that each two pixels of the mold texture likely, but not necessarily, have different pixel values. Preparation of the mold texture also comprises writing the seed texture into the mold texture as texture data. This is done in a suitable area, for example starting in an edge of the mold texture, so that the texture data corresponding to the seed texture runs along two edges of the mold texture. The texture data thus corresponds to parts of the mold texture in which the mold texture contains data that is usable for the mold form. This method provides for a suitable starting point for the generative neural network, resulting in a high quality of the mold texture.

According to a further embodiment of the invention, it is provided that a source texture is sampled from the mold texture and used as the input texture for the generative neural network, wherein a resulting output texture of the generative neural network is written as texture data into a suitable area of the mold texture. The input data for the generative neural network, corresponding to the input texture, is taken from the mold texture itself. Preferably, the seed texture is written into the mold texture in preparation. The area into which the seed texture is written is particularly chosen in such a way that the texture data of the mold texture corresponding to the seed texture is at least in part used for the input texture. For example, the input texture is sampled in such a way from the mold texture, that only a part of it contains texture data that already had been written into the mold texture. This input texture is used as input for the generative neural network which creates an output texture based on the input texture. The output texture is then written into the mold texture as texture data, especially in the same location from which the input texture had been read. Preferably, the process is repeated with changing locations from which the input texture is read and to which the output texture is written as texture data, until the mold texture is completely filled with texture data. Using this method a high quality of the mold texture is achieved.

When sampling the input texture from the mold texture, in addition a mask may be determined. The mask indicates parts of the input texture that do not contain texture data but correspond to initialized parts of the mold texture. The mask is used by the generative neural network to determine, which part of the input texture contains data based on which the output texture is to be generated and may not be modified and which part is to be filled with texture data. Using such a mask, the size of the output texture may be chosen identical to that of the input texture.

According to a further embodiment of the invention, it is provided that the seed texture and/or the source texture and/or the mold texture and/or the input texture arc normalized before using the generative neural network to extend the seed texture. Normalizing the respective texture comprises determining the range of values withing the texture data of the texture and calculating a new value for each pixel in the texture according to a mathematical function based on the range of values. Preferably the respective texture is normalized to a predetermined range between 0 and 1 or between -1 and +1. For example, the mold texture is initialized with pixel values in the predetermined range and the seed texture is written into the mold texture in normalized form, i. e. the seed texture is normalized and then written into the mold texture. In the alternative, the mold texture is not normalized, but after sampling the input texture from the mold texture the input texture is normalized, used as input for the generative neural network and the output texture is written into the mold texture in denormalized form. Using normalization, the computational stability of the generative neural network is improved.

According to a further embodiment of the invention, it is provided that the source texture is sampled from an area of the mold texture that contains the texture data, especially from an area of the mold texture that only in part contains the texture data. This strategy has already been mentioned. The source texture is taken from the mold texture, wherein the size of the source texture is smaller than the size of the mold texture in at least one dimension. Preferably, the size of the source texture corresponds to the size of the input texture of the generative neural network, especially in every dimension. For example, the size of the source texture corresponds to the size of the seed texture, again especially in every dimension.

In a preferred embodiment, a sample window with the size of the input texture is moved over the mold texture, starting in a starting position. The source texture is sampled from the mold texture in the sample window and used as the input texture. The output texture resulting from the generative neural network is written into the mold texture as texture data in the window. Afterwards, the sample window is moved, for example only in a first direction, especially by a distance that is smaller than the size of the source texture in this dimension. For example, the distance is at most 25 %, at most 20 % or at most 15 % of the source texture's size. The process is performed repeatedly, until the sample window reaches the end of the mold texture in the first direction. In this case, the position of the sample window is reset in the first direction to the starting position and advanced in a second direction that is, preferably, perpendicular to the first direction and the process is again repeated. With this method, good results for the mold texture are achieved.

According to a further embodiment of the invention, it is provided that the texture size of the source texture corresponds to an input texture size of the generative neural network. If, in the context of this description, reference is made to a size of a texture, the size in all dimensions is referred to if not otherwise indicated. In this specific case that means that the size of the source texture is identical to the size of the input texture in all dimensions, i. e. in two dimensions that are perpendicular to each other. Specifically, the textures, for example the source texture and the input texture, each contain pixels that are organized in a number of rows and a number of columns, wherein the numbers are identical for both textures.

According to a further embodiment of the invention, it is provided that a convolutional neural network is used as the generative neural network. The generative neural network thus comprises at least one convolutional layer. The convolutional layer is the hidden layer between the input layer and the output layer of the generative neural network. The input layer receives the input texture and the output texture is taken from the output layer. The convolutional layer comprises one or more filters. It may in addition comprise an activation function, for example a rectifier or a rectified linear input (ReLU). It convolves its input and passes the result of the convolution to the next layer, for example another convolutional layer or the output layer. Convolutional neural networks and their principles are presumed to be known in the art and will not be discussed in detail. If the generative neural network is part of the generative adversarial network, the latter is preferably a deep convolutional network. Using the convolutional neural network with the at least one convolutional layer has the advantage, that details of the sample textures are learned during training so that the generative neural network is configured to reproduce details that are present in the seed texture. In addition, spatial coherence is kept intact, in the sense that pixel neighbourhood information is preserved in convolutional layers, and not flattened as in dense layers.

According to a further embodiment of the invention, it is provided that a convolutional neural network with a plurality of independent convolutional filter groups is used as the generative neural network. The convolutional filter groups each contain at least one convolutional layer in the context of this description. They are independent from each other, especially meaning that back-propagation during training is performed completely independent for the filter groups and no skip connections are present between them. In other word the convolutional layers of the filter groups are separate and computed separately, both during training as well as during creating the mold texture.

The use of independent filter groups is usually avoided for complex structures as the mold texture, as it leads to stability and efficiency issues, at least for generic cases. However, the applicant has surprisingly found out, that the independent feature groups lead to mold textures of excellent quality, because the at least one convolutional layer of each convolutional filter group is specifically parameterized to replicate features that are used in mold textures. For example, each convolutional filter group is parameterized to reproduce features of different size scales. For example, three independent convolutional filter groups are used. A first of the groups is parameterized to reproduce small features, a second of the groups is parameterized to reproduce medium sized features and a third of the groups is parameterized to reproduce large features of the seed texture. For example, reshaping of tensors is only done inside the independent convolutional filter groups, while no such reshaping is done throughout the generative neural network outside of the convolutional filter groups. However, in the alternative, only decompressing is performed inside of the filter groups, while compressing and/or processing is also or only performed outside of the filter groups.

Preferably, each of the independent filter groups comprises several convolutional layers. Ideally, a large part of the total layers of the generative neural network is part of the independent filter groups. For example, at least 70 %, at least 80 % or at least 90 % of the layers of the generative neural network are part of the independent filter groups. The independent filter groups are computed in parallel. This means that the input tensor for the independent filter groups are computed from the output tensor of a layer preceding the independent filter groups. The output tensor of the independent filter groups is merged and used as input tensor of a layer following the independent filter groups. For example, the number of layers of the generative neural network between the input layer and the independent filter groups corresponds to a first number and the number of layers of the generative neural network between the independent filter groups and the output layer corresponds to a second number. Preferably, the first number and/or the second number each are at most 20 %, at most 10 % or at most 5 % of the total number of the generative neural network. The input layer herein is the layer that receives the input texture and the output layer is the layer from which the output texture is taken. It becomes clear, that the most preferred architecture of the generative neural network separates the layers of the filter groups over a large part of the neural network, resulting in the advantages that have already been mentioned.

According to a further embodiment of the invention, it is provided that all neural network parameters are used to determine output tensors of the convolutional filter groups, so that at least a part of the output texture directly corresponds to a recombination of the output tensors of the convolutional filter groups. The neural network parameters determine the output tensors of the filter groups and - optionally - the recombination of their output. This means that after the output tensors of the filter groups are recombined to a single output tensor only predetermined operations are performed on the single recombined output tensor in order to determine the output texture. The determination is not dependent on the neural network parameters and is invariant over training. The predetermined operations and/or their parameters are constant and are not altered during the training of the generative neural network. For example, the operations comprise a normalization or a renormalization of the recombined output tensor of the filter groups. The output texture is, therefore, at least in part or completely directly dependent on the recombined output tensor and this via predetermined operations with fixed parameters.

Alternatively, after the recombination of the output tensors of the filter groups, the recombined output tensor is used as an input for one or more convolutional layers of the generative neural network. It is preferred, that the number of convolutional layers between the recombined output tensor and the output layer is at most three, at most two or - especially preferred - at most one. For example, the recombined output tensor is directly used as the input tensor for the at least one convolutional layers and its output tensor is used directly as input tensor for the output layer, at the most via the predetermined operations as already described. Using this approach, a very big part of the generative neural network is divided into several parallelly computed convolutional filter groups, the output of which is only recombined shortly before the output layer, i. e. shortly before the output texture is generated by the generative neural network. This leads to the specialized functions of the convolutional filter groups that are trained to reproduce differently scaled features of the source texture. Preferably, for the generative neural network only at one point independent filter groups are used. This means, that the generative neural network is split up into filter groups with parallel convolutional layers only once. After the recombination of the output tensors of the filter groups into a single output tensor, no further independent filter groups occur until the output layer.

According to a further embodiment of the invention, it is provided that filter groups with different filter parameters, for example filter size, stride and dilation rate, are used for the convolutional filter groups. Each convolutional layer in the filter groups uses predetermined values for the parameters of its convolutional layers. As parameter, preferably, one of the parameters filter size, stride and dilation rate is used. For example, a first of the filter groups uses first values for filter size, stride and/or dilation rate, a second of the filter groups uses second values for filter size, stride and/or dilation rate, and a third of the filter groups uses third values for filter size, stride and/or dilation rate. For at least one of the parameters, several of the parameters or all parameters, the values are different from each other. The filter parameters of the filter groups are configured to capture structures of different scales during training and to reproduce these structures with different scales during the operation of the generative neural network to extend the seed texture to the size of the mold texture, i. e. to determine the output texture for completing the mold texture.

For example, the convolutional layers in each of the filter groups can be grouped into different stages, namely a first stage performing compressing, a second stage performing processing and a third stage performing decompressing. The compressing stage can also be denominated as encoding stage and the decompressing stage as decoding stage. Each stage comprises at least one convolutional layer. If the respective stage has several convolutional layers they are preferably connected serially, i. e. the output tensor of each of the convolutional layers is used as the input tensor for the convolutional layer following it. During the compressing stage the size of the input tensor is - always or preferably only sometimes - reduced from one convolutional layer to the next, so that an output tensor of the compressing stage is smaller than its input stage. Preferably, the output tensor of the compressing stage has a higher number of channels than its input tensor. In other words, over the compressing stage with its at least one convolutional layer, the tensor size decreases and - preferably - the number of channels increase.

During the processing stage the size of the input tensor stays the same. This means, that the output tensor of the processing stage has the same size than its input tensor. In other words, over the processing stage with its at least one convolutional layer, the tensor size stays the same and - preferably - also the number of channels. During the decompressing stage the size of the output tensor is increased from one convolutional layer to the next. This means, that the output tensor of the decompressing stage is larger than its input tensor. In other words, over the decompressing stage with its at least one convolutional layer, the tensor size increases and - preferably - the number of channels decreases.

For example, in the compressing stage of the first filter group, the at least one convolutional layer uses a first value for the stride and a first value for the dilation rate. In the compressing stage of the second filter group the at least one convolutional layer uses a second value for the stride and a second value for the dilation rate. And in the compressing stage of the third filter group the at least one convolutional layer uses a third value for the stride and a third value for the dilation rate. For example the first value for the stride is larger than one, while the second value and the third value for the stride are smaller, preferably equal to one. Additionally or in the alternative, the first value for the dilation rate is equal to one, while the second value and the third value for the dilation rate are larger. For example, the third value for the dilation rate is larger than the second value for the dilation rate, which is in turn larger than the first value for the dilation rate. Ideally, the filter size is identical for all convolutional layers in the compressing stages of the filter groups. For example, a filter size of at least 3x3, at least 5x5 or at least 7x7 is used.

Additionally or in the alternative, in the processing stage of the first filter group, the at least one convolutional layer uses a first value for the stride and a first value for the dilation rate. In the processing stage of the second filter group the at least one convolutional layer uses a second value for the stride and a second value for the dilation rate. And in the processing stage of the third filter group the at least one convolutional layer uses a third value for the stride and a third value for the dilation rate. For example the first value, the second value and the third value for the stride are identical, for example equal to one. However, the first value, the second value and the third value for the dilation rate increase, especially with respect to the value used in the compressing stage of the respective filter group. For example, the first value of the dilation rate in the processing stage is larger than the first value of the dilation rate in the compressing stage; and/or the second value of the dilation rate in the processing stage is larger than the second value of the dilation rate in the compressing stage; and/or the third value of the dilation rate in the processing stage is larger than the third value of the dilation rate in the compressing stage. Ideally, the filter size is identical for all convolutional layers in the compressing stages of the filter groups. For example, a filter size of at least 3x3, at least 5x5 or at least 7x7 is used.

Additionally or in the alternative, in the decompressing stage of the first filter group, the at least one convolutional layer uses a first value for the stride and a first value for the dilation rate. In the decompressing stage of the second filter group the at least one convolutional layer uses a second value for the stride and a second value for the dilation rate. And in the decompressing stage of the third filter group the at least one convolutional layer uses a third value for the stride and a third value for the dilation rate. For example the first value, the second value and the third value for the stride are identical, for example equal to one. Preferably, also the first value for the dilation rate is equal to one, while the second value and the third value for the dilation rate are larger than one. Ideally, the filter size is identical for all convolutional layers in the compressing stages of the filter groups. For example, a filter size of at least 3x3, at least 5x5 or at least 7x7 is used. Using such a configuration of the convolutional layers in the filter groups and their stages results in the reliable reproduction of the features of the seed texture in the mold texture, even if they have different scales.

According to a further embodiment of the invention, the convolutional neural network has a number of first convolutional layers outside of the independent convolutional filter groups and a number of second convolutional layers outside of the independent convolutional filter groups. A totality of the convolutional layers within the generative neural network are grouped into the first convolutional layers and the second convolutional layers. The number of the first layers and the number of the second layers each is at least one. However, all layers of each of the beforementioned groups are either completely part of the first convolutional layers or part of the second convolutional layers. This means, that each of the following steps is either performed completely inside or completely outside of the independent convolutional filter groups: compressing, processing and decompressing. For example, all steps are performed in the independent convolutional filter groups. In this case, preferably, no tensor reshaping is done outside of these groups. In the alternative, compressing is performed outside of the independent convolutional filter groups, while at least decompressing is performed in the independent convolutional filter groups. Common compressing outside of the filter groups can be beneficial for decreasing training time.

According to a further embodiment of the invention, it is provided that convolutional layers of the same rank in the convolutional filter groups differ between the convolutional filter groups regarding at least one of the filter parameters. The rank denominates the order number of the convolutional layers in the filter groups or in their stage. For example, a rank of one relates to the first convolutional layer in the respective filter group or stage, a rank of two to the second and so on. Convolutional layers in different filter groups or stages therefore have the same rank if the same number of convolutional layers precede them in their respective filter group or stage. Convolutional layers in at least some of the filter groups, preferably all of the filter groups, differ in at least one of the filter parameters. That means that these convolutional layers have different values for the filter size and/or the stride and/or the dilation rate. The different values for the filter parameters have already been exemplarily shown. By using the different values for the filter parameters, the different scales of the seed texture can be transferred to the mold texture with high accuracy.

According to a further embodiment of the invention, it is provided that in at least one of the convolutional layers, parallel layers are used and output tensors of the parallel layers are recombined in a following layer. The parallel layers are applied on the same input tensor, namely the input tensor of the at least one convolutional layer. Each of the parallel layers has an output tensor based on this input tensor and the output tensors of the parallel layers are recombined in the layer following the at least one convolutional layer. For example, the output tensors are recombined by multiplication or addition, especially weighted addition, for example evenly weighted addition. Such a structure allows for a high flexibility.

According to a further embodiment of the invention, it is provided that in at least one of the convolutional filter groups a gated convolution is performed. The gated convolution is a computing block that comprises the two parallel layers, a recombination layer and an activation layer. Both parallel layers take an input tensor of the gated convolution block as input tensor. One of the layers is a convolutional layer without an activation function, i. e. an output tensor of the layer is derived directly from its input tensor without changes by an activation function. Another of the layers is a convolutional layer with sigmoid activation; the output tensor of this layer is thus normalized to the range of 0 to 1. The recombination layer recombines its input tensors, i. e. the output tensors of the parallel layers, into an output tensor, for example by calculating the tensor product, which is done element-wise. The activation layer uses the output tensor of the recombination layer as input tensor and uses an activation function to determine its output tensor from that input tensor. The activation function is preferably an exponential linear unit activation function (ELU). Using the gated convolution realizes a high accuracy in the reproduction of the features of the seed texture in the mold texture.

According to a further embodiment of the invention, it is provided that the texture data of the mold texture is completed in a first direction in a first row and then the texture data of the mold texture is completed in the first direction in at least one subsequent row. As has been explained above, the texture data of the mold texture is complemented in at least one step by using the generative neural network in that the source texture is sampled from the mold texture and the output texture is written back to the mold texture. The aforementioned window is moved in the first direction between steps, the first direction being parallel to a first axis. This is process is performed until the mold texture is completed in the first direction, i. e. the window reaches the end of the mold texture in that direction. As a result, the mold texture contains the first row of texture data that can now be used to complete the mold texture. To this effect, the described process is repeated for at least one subsequent row of the mold texture, preferably for several subsequent rows, until the mold texture is completely filled with texture data. At this point, the mold texture may be used directly to create the casting mold. This method allows for a simple and efficient extension of the seed texture to the texture size of the mold texture.

According to a further embodiment of the invention, it is provided that after completing the mold texture, the texture data of the mold texture is rescaled. The rescaling is preferably used to increase contrast of the texture data. For this purpose, the range of pixel values throughout the whole mold texture is determined. If the range does not use a full range that is determined by the data type of the pixel values, for example a numeric data type using eight bits, the pixel values of the mold texture are recalculated in such a way that they afterwards use the full range. The, the tendency of grayscale values to be changed towards an average value is mitigated. This method serves to increase the overall quality of the resulting mold texture.

According to a further embodiment of the invention, it is provided that the seed texture and/or the sample texture are scanned from a surface, i. e. using an optical sensor, i. e. a camera, especially in combination with a microscope. Scanning the surface in order to obtain the seed texture or the sample texture from a surface in real world lead to highly realistic input data for the generative neural network. Consequently, the mold texture that is generated by the generative neural network will have a similar level of realism, leading to a very high quality casting mold. The scanning is for example performed with the optical sensor. Other methods are of course also suited for this task. For example, a sufficiently fine tactile sensor may be used for the surface scanning.

According to a further embodiment of the invention, it is provided that the mold texture is provided on the casting mold, i. e. using laser ablation. After generating the mold texture, the casting mold is machined based on the mold texture. This means, that a casting mold is created that has a surface that corresponds to the mold texture, either in positive or in negative form. For example, the casting mold is provided as a negative or a positive mold for the mold texture. Providing the casting mold with the mold texture is, for example, done by laser ablation of a surface of the mold. The surface is, thus, machined in order to correspond to the mold texture. The workpieces that are created by molding using the casting mold are of high quality and feature a seamless texture with a natural look and feel over a large area.

The invention further relates to a device for generating a mold texture for a casting mold, especially for carrying out the method as detailed in this description. The device is configured to generate the mold texture from a seed texture, the mold texture having a larger texture size in at least one dimension than the seed texture, wherein the seed texture is provided as an input texture for a generative neural network with a plurality of neural network parameters determined during training of the generative neural network and the generative neural network is used to extend the seed texture to the texture size of the mold texture.

The advantages of such a design of the device and such a method have already been pointed out. Both the device and the method for its operation can be further developed according to the explanations within the scope of this description, so that in this respect reference is made to the latter. The device may carry out the method as described by itself or it may comprise means for carrying out the method, for example a computer.

In addition, the invention relates to a computer program product comprising instructions which cause the device to carry out the explained method in accordance with the explanations in this description. With regard to the advantages and possible advantageous further embodiments, reference is made to the description in its entirety.

Further, the invention relates to a computer-readable medium comprising instructions, which, when executed by a computer, cause the computer to carry out the method as described in the description.

The features and combinations of features described in the description, in particular the features and combinations of features described in the following figure description and/or shown in the figures, can be used not only in the respective combination indicated, but also in other combinations or on their own, without leaving the scope of the invention. Thus, embodiments which are not explicitly shown or explained in the description and/or the figures, but which result from the explained embodiments or can be derived from them, are also to be regarded as encompassed by the invention.

The invention is explained in more detail below with reference to the embodiments shown in the drawings, without limitation of the invention. Hereby shows:
- Fig. 1: a schematic illustration of the surface of a casting mold that is created with a mold texture,
- Fig. 2: a schematic view of the generative neural network in a first embodiment, and
- Fig. 3: a schematic view of the generative neural network in a second embodiment.

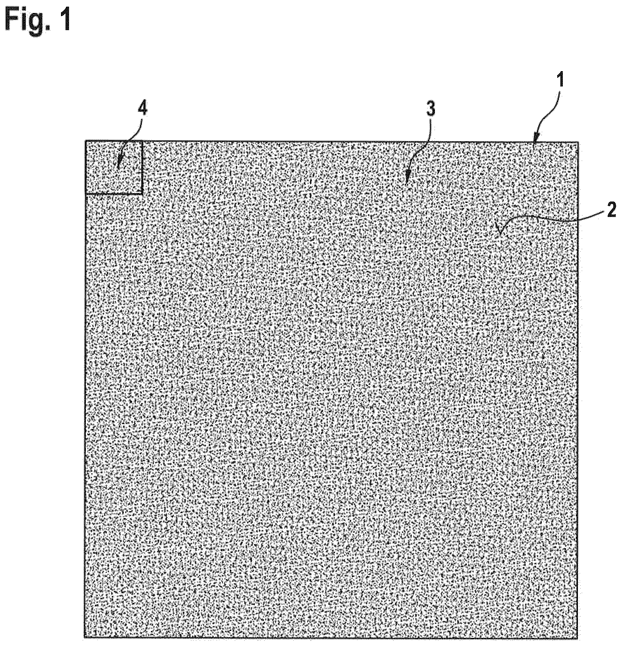

Fig. 1 illustrates a part of a casting mold 1, namely a surface 2 of the casting mold 1. The surface 2 is provided with a mold texture 3. The mold texture 3 is derived from a seed texture 4 that is also illustrated. It is notable, that the size of the seed texture 4 is much smaller than the size of the mold texture 3 in every direction.

In the following the method that is used to generate the mold texture 3 from the seed texture 4 is described. First, the mold texture 3 is completed in a first direction, in which the seed texture 4 is smaller than the mold texture 3. For this purpose, the mold texture 3 is initialized, for example filled with initialization data, and the seed texture 4 is written as texture data into an area of the mold texture 3, so that the seed texture 4 or its texture data becomes a part of the mold texture 3. The initialization data is overwritten with the texture data. Afterwards, an imaginary sample window is positioned in the mold texture 3 so that it overlaps with the texture data that has already been written to the mold texture 3. Over the course of the mold texture generation, the sample window will be located in different positions that differ in a first direction but are identical in a second direction. In the first position the sample window overlaps the texture data only in part, for example only a third of the sample window is filled with texture data while the rest of the sample window contains initialized parts of the mold texture 3.

A source texture is sampled from the mold texture 3 in the area covered by the sample window. Preferably, a mask is used to indicate, which part of the sample window contains texture data and which initialization data of the mold texture 3. The source texture and - preferably - the mask are used as input for a generative neural network 7, that will be described later. The generative neural network 7 determines an output texture from the source texture, preferably using the mask. The output texture is written as texture data into the mold texture 3 in the area that is covered by the sample window. Thus, the mold texture 3 is filled with texture data in that area. Afterwards, the sample window is moved to another position in the first direction and the process is repeated. This is done, until the sample window reaches the end of the mold texture 3 in the first direction.

At this point, the seed texture 4 has been used to complete the mold texture 3 in the first direction. Thus, a first row with texture data, corresponding to several rows of pixels, has been generated that spans the whole width of the mold texture 3. The process described above is repeated, using several different positions of the sample window. Preferably, the process is repeated over the whole height of the mold texture 3. That means that after completing the mold texture 3 in the first row, the process is repeated for subsequent rows, by first moving the sample window in a second direction which is perpendicular to the first direction and then again completing the subsequent row in the first direction. Best results are achieved, if the rows are overlapping each other, i. e. if the sample window has a larger height than the rows and contains texture data from a previous row. The mask is preferably adapted to reflect this.

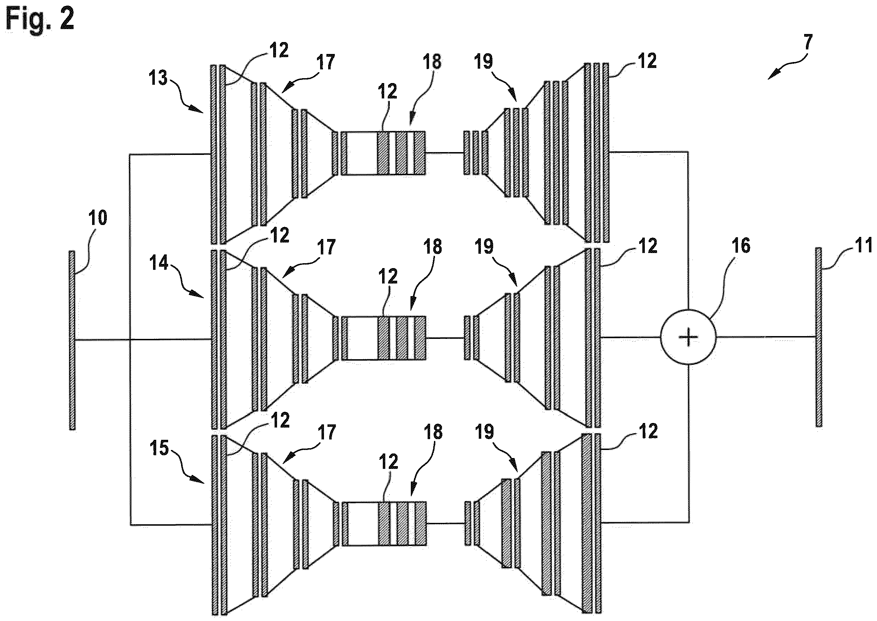

Fig. 2 illustrated the generative neural network 7 in a first embodiment. The neural network 7 comprises an input layer 10 and an output layer 11. Between the input layer 10 and the output layer 11 several hidden layers 12 are present only some of which are specifically indicated by reference signs. Preferably, each of the shown bars represent one of the hidden layers 12. The hidden layers 12 are at least in part convolutional layers. They are grouped in several independent convolutional filter groups 13, 14 and 15. The layers 12 of the filter groups 13, 14 and 15 use an output tensor of the input layer 10 as input tensors or their input tensors are derived from the output tensor, for example using one or more hidden layers 12 (not depicted). Output tensors of the filter groups 13, 14 and 15 are recombined using a hidden layer 16. The hidden layer 16 is directly or indirectly connected to the output layer 11. The output texture is reconstructed from the output tensor of the output layer 11.

It becomes clear that most, if not all, of the hidden layers 12 and 16 of the neural network 7 are part of the filter groups 13, 14 and 15. It is also clear, that, preferably, no further independent filter groups are used after recombination of the output tensors of the filter groups 13, 14 and 15. This means, that after the recombination no further split up of hidden layers in filter groups is performed. The hidden layers 12 of the filter groups 13, 14 and 15 are convolutional layers. They are grouped into several stages, namely a first stage 17 performing compressing, a second stage 18 performing processing and a third stage 19 performing decompressing. The hidden layers 12 differ in their filter parameters between the filter groups 13, 14 and 15. This means that the hidden layers 12 of the first filter group 13 use first filter parameters, the hidden layers 12 of the second filter group 14 use second filter parameters and the hidden layers 12 of the third filter group 15 use first third parameters. As parameters for example stride and dilation rate are used. The first parameters, the second parameters and the third parameters are configured so that the hidden layers 12 of the filter groups 13, 14 and 15 reconstruct features in the mold texture 3 and the seed texture 4 of different scales.

It is important to note, that while for this first embodiment there can be at least one hidden layer 12 between the input layer 10 and the filter groups 13, 14 and 15, this hidden layer 12 is configured to keep the size of the tensor. This means, that for each hidden layer 12 between the input layer 10 and the filter groups 13, 14 and 15 its output tensor has the same size as its input tensor. No reshaping is performed by this at least one hidden layer 12. Reshaping only takes place in the filter groups 13, 14 and 15, more precisely in the first stage 17 (compressing) and the third stage 19 (decompressing). In the hidden layers 12 of the first stage 17 the tensor dimensions are reduced, while they are increased in the hidden layers 12 if the third stage 19.

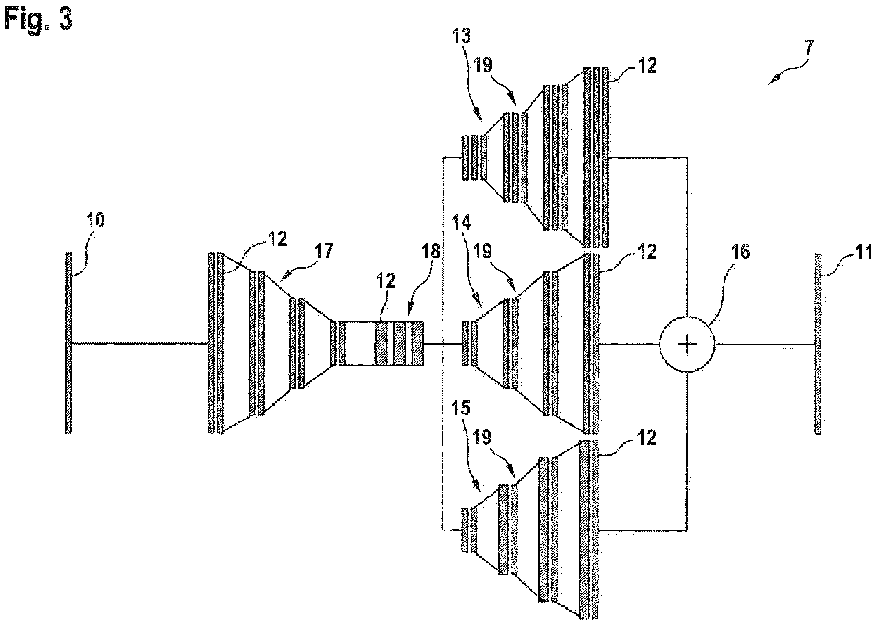

Fig. 3 shows a second embodiment of the generative neural network 7. General features are identical to the first embodiment. Because of this, reference is made to the respective explanations and in the following, only the differences are highlighted. Those are grounded in the fact, that only the hidden layers 12 of the third stage 19 are part of the filter groups 13, 14 and 15. This means that the filter groups 13, 14 and 15 are connected to the input layer 10 via the hidden layers 12 of the first stage 17 and the second stage 18. That means that compressing and processing of the tensors is performed outside of the filter groups 13, 14 and 15, while decompressing is performed in the filter groups 13, 14 and 15 that work independently from each other. Using the second embodiment, the mold texture 3 has quality that is nearly as good as that resulting from the first embodiment while avoiding numerical stability issues that may arise from performing compressing, processing and decompressing in completely independent filter groups 13, 14 and 15.

The methods explained in this description serve to generate a mold texture 3 having a very high quality. Especially problems with visible periodicity or visible tiling borders in the mold texture 3 are effectively avoided. The resulting mold texture 3 is used to machine the casting mold 1, which is then used to produce workpieces with a molding process, for example an injection molding process or a die casting process.

### LIST OF REFERENCE SIGNS

- 1: casting mold
- 2: surface
- 3: mold texture
- 4: seed texture
- 7: generative neural network
- 10: input layer
- 11: output layer
- 12: hidden layer
- 13: filter group
- 14: filter group
- 15: filter group
- 16: hidden layer
- 17: first stage
- 18: second stage
- 19: third stage

## Claims

1. Method for generating a mold texture (3) for a casting mold (1), **characterised in that** the mold texture (3) is generated from a seed texture (4), the mold texture (3) having a larger texture size in at least one dimension than the seed texture (4), wherein the seed texture (4) is provided as an input texture for a generative neural network (7) with a plurality of neural network parameters determined during training of the generative neural network (7) and the generative neural network (7) is used to extend the seed texture (4) to the texture size of the mold texture (3).

2. Method according to claim 1, **characterized in that** the generative neural network (7) is part of an generative adversarial network together with a discriminatory neural network, and the generative neural network (7) and the discriminatory neural network are trained with a training dataset that comprises a plurality of sample textures.

3. Method according to any one of the preceding claims, **characterized in that** a source texture is sampled from the mold texture (3) and used as the input texture for the generative neural network (7), wherein a resulting output texture of the generative neural network (7) is written as texture data into a suitable area of the mold texture (3).

4. Method according to any one of the preceding claims, **characterized in that** a convolutional neural network with a plurality of independent convolutional filter groups (13, 14, 15) is used as the generative neural network (7).

5. Method according to any one of the preceding claims, **characterized in that** all neural network parameters are used to determine output tensors of the convolutional filter groups (13, 14, 15), so that at least a part of the output texture directly corresponds to a recombination of the output tensors of the convolutional filter groups (13, 14, 15).

6. Method according to any one of the preceding claims, **characterized in that** filter groups (13, 14, 15) with different filter parameters are used for the convolutional filter groups (13, 14, 15).

7. Method according to any one of the preceding claims, **characterized in that** convolutional layers (12) of the same rank in the convolutional filter groups (13, 14, 15) differ between the convolutional filter groups (13, 14, 15) regarding at least one of the filter parameters

8. Method according to any one of the preceding claims, **characterized in that** in at least one of the convolutional filter groups (13, 14, 15) a gated convolution is performed.

9. Method according to any one of the preceding claims, **characterized in that** the texture data of the mold texture (3) is completed in a first direction in a first row and then the texture data of the mold texture (3) is completed in the first direction in at least one subsequent row.

10. Method according to any one of the preceding claims, **characterized in that** after completing the mold texture (3), the texture data of the mold texture (3) is rescaled.

11. Method according to any one of the preceding claims, **characterized in that** the seed texture (4) and/or the sample texture are scanned from a surface.

12. Method according to any one of the preceding claims, **characterized in that** the mold texture (3) is provided on the casting mold (1).

13. Device for generating a mold texture (3) for a casting mold (1), especially for carrying out the method according to any one of claims 1 to 12, **characterised in that** the device is configured to generate the mold texture (3) from a seed texture (4), the mold texture (3) having a larger texture size in at least one dimension than the seed texture (4), wherein the seed texture (4) is provided as an input texture for a generative neural network (7) with a plurality of neural network parameters determined during training of the generative neural network (7) and the generative neural network (7) is used to extend the seed texture (4) to the texture size of the mold texture (3).

14. Computer program comprising instructions which, when the program is executed by a computer, cause the computer to carry out the method of any one of the claims 1 to 12.

15. Computer-readable medium comprising instructions, which, when executed by a computer, cause the computer to carry out the method of any one of claims 1 to 12.
